# EUROPÄISCHE PATENTSCHRIFT

(11) **EP 4 498 072 B1**
(45) Veröffentlichungstag und Bekanntmachung des Hinweises auf die Patenterteilung: **23.09.2026**
(21) Anmeldenummer: 24166622.1
(22) Anmeldetag: 27.03.2024
(51) Int. Cl.: G01N 21/90, G01N 21/952, G01N 21/84

(54) **VERFAHREN UND VORRICHTUNG ZUR INSPEKTION MINDESTENS EINER AUSSENFLÄCHE VON BEHÄLTERN**
METHOD AND DEVICE FOR INSPECTING AT LEAST ONE OUTER SURFACE OF CONTAINERS
PROCÉDÉ ET DISPOSITIF D'INSPECTION D'AU MOINS UNE SURFACE EXTÉRIEURE DE RÉCIPIENTS

(30) Priorität: 24.07.2023 DE 102023119491
(43) Veröffentlichungstag der Anmeldung: 29.01.2025
(73) Patentinhaber: ibea Ingenieurbüro für Elektronik und Automatisation GmbH, 22525 Hamburg (DE)
(72) Erfinder: Newger, Michael, 22397 Hamburg (DE); Börding, Tobias, 21435 Stelle (DE); An Luo, Hans, 21075 Hamburg (DE)
(74) Vertreter: Klickow & Wetzel PartGmbB

(56) Entgegenhaltungen:
- EP-A2- 0 872 724
- WO-A1-2021/198797
- DE-T2- 69 919 297
- JP-A- 2005 345 423
- US-A- 4 691 231

## Beschreibung

Die Erfindung betrifft eine Vorrichtung zur Inspektion mindestens einer Außenfläche von Behältern.

Darüber hinaus betrifft die Erfindung ein Verfahren zur Inspektion mindestens einer Außenfläche von Behältern.

Behälter im Sinne dieser Schrift können beispielsweise Dosen oder Flaschen sein. In der Produktion werden die Behälter zunächst als solche gefertigt und häufig anschließend mit einem Dekor versehen, das auf die Mantelfläche des Behälters gedruckt oder als Etikette auf diese aufgebracht wird.

Sowohl bei der Behälterproduktion als auch bei der anschließenden Dekoration der Behälter können Fehler auftreten, die zu einem unerwünschten Aussehen der Behälteraußenflächen führen. Daher ist es bereits bekannt, Inspektionsvorrichtungen und -verfahren anzuwenden, um fehlerhafte Behälter zu identifizieren und ggf. auszusortieren.

Beispielsweise wird innerhalb des Produktionsprozesses einer Blechdose für Lebensmittel die oben geöffnete Blechdose auf einem Förderband stehend zum nächsten Produktionsprozess transportiert. Zur Inspektion auf Dekorfehler werden von den Dosen dabei von außen mit Hilfe von mehreren umliegenden Industriekameras Fotos aufgenommen. Die mit den Industriekameras erfassten Einzelaufnahmen werden anschließend in einer Software zusammengeführt und das vollständige Bild des Dekors wird auf Fehler überprüft.

Aufgrund willkürlicher Drehlagen der Dosen, nicht reproduzierbaren Hintergrundstörgrößen (z.B. Farbe und Beschaffenheit des Förderbandes, nachfolgende Dosen etc.) und der nicht perfekten Geometrie und Ausrichtung der Dose, ist die Parametrierung der Software für das korrekte Zusammenfügen der Einzelaufnahmen zum Gesamtbild aufwendig, rechenintensiv und fehlerbehaftet. Flächenmäßig kleine Fehler, beispielsweise am Dekor einer Dose, lassen sich nicht mit hinreichender Sicherheit detektieren. Das mithilfe der bekannten Vorrichtungen und Verfahren realisierbare Inspektionsergebnis ist für die Anforderungen des Marktes somit insgesamt nicht zufriedenstellend.

Die Dokumente EP 0 872 724 A2, DE 699 19 297 T2, WO 2021/198797 A1, JP 2005 345423 A und US 4 691 231 A zeigen optische Inspektionssysteme für Behälter zur äußerlichen Überprüfung dieser, beispielsweise auf fehlerhaftes Dekor.

Es ist aus der DE 699 19 297 T2 bereits bekannt, die Behälter vor der Inspektion in eine Sollausrichtung zu bringen und anschließend zu inspizieren. EP 0 872 724 A2 sowie JP 2005 345423 A lehren, die Behälter mithilfe mindestens eines rotierbaren Gurts zu drehen und eine mehrstufige optische Inspektion von verschiedenen Seiten mit einem definierten Verdrehen zwischen den Stationen vorzunehmen (JP 2005 345423 A). EP 0 872 724 A2, DE 699 19 297 T2 und WO 2021/198797 A1 offenbaren eine Rotation der Behälter während der Bildaufnahme.

Es ist daher eine Aufgabe der Erfindung, eine Vorrichtung zur Inspektion mindestens einer Außenfläche von Behältern zu schaffen, die zumindest einen Teil der genannten Probleme löst.

Diese Aufgabe wird erfindungsgemäß durch eine Vorrichtung zur Inspektion mindestens einer Außenfläche von Behältern gemäß Patentanspruch 1 gelöst.

Es ist eine weitere Aufgabe der Erfindung, ein Verfahren zur Inspektion mindestens einer Außenfläche von Behältern anzugeben, das zumindest einen Teil der genannten Probleme löst.

Diese Aufgabe wird erfindungsgemäß durch ein Verfahren zur Inspektion mindestens einer Außenfläche von Behältern gemäß Patentanspruch 9 gelöst.

In den abhängigen Patentansprüchen werden vorteilhafte Weiterbildungen der Erfindung beansprucht.

Die nachfolgend offenbarten Merkmale einer Vorrichtung zur Inspektion mindestens einer Außenfläche von Behältern und eines Verfahrens zur Inspektion mindestens einer Außenfläche von Behältern sind in allen ausführbaren Kombinationen Bestandteil der Erfindung.

Eine erfindungsgemäße Vorrichtung zur Inspektion mindestens einer Außenfläche von Behältern weist zumindest eine Erfassungseinrichtung zur Erfassung der Ausrichtung eines zu inspizierenden Behälters, mindestens ein Ausrichtungssystem zur definierten Ausrichtung eines zu inspizierenden Behälters sowie mindestens eine Bilderfassungseinrichtung zur Erfassung der mindestens einen zu inspizierenden Außenfläche des zu inspizierenden Behälters auf.

Die Erfassungseinrichtung zur Erfassung der Ausrichtung eines zu inspizierenden Behälters ist zur Erfassung der Behälterausrichtung anhand der Lagebestimmung mindestens eines Behältermerkmals ausgebildet.

Die Erfassungseinrichtung weist zur Erfassung der Ausrichtung eines zu inspizierenden Behälters dazu mindestens eine Kamera auf.

In vorteilhaften Ausführungsformen der Erfindung ist die mindestens eine Kamera mit einer Weitwinkeloptik ausgerüstet.

In Ausführungsformen der Erfindung ist die mindestens eine Kamera der Erfassungseinrichtung zur Erfassung der Ausrichtung eines zu inspizierenden Behälters als eine Farb-Matrix-Kamera mit einer Auflösung von mindestens 1,3 MP ausgebildet.

Besonders vorzugsweise weist die Erfassungseinrichtung zur Erfassung der Ausrichtung eines zu inspizierenden Behälters mindestens eine Beleuchtungsvorrichtung auf.

Die mindestens eine Kamera der Erfassungseinrichtung zur Erfassung der Ausrichtung eines zu inspizierenden Behälters ist über dem zu inspizierenden Behälter angeordnet und derart ausgerichtet, dass der Kamerafokus von oben auf und/oder in den Behälter gerichtet ist. Dies ist insbesondere im Hinblick auf zu inspizierende Behälter wie Dosen oder Flaschen vorteilhaft, bei denen die zu inspizierende Mantelfläche vom Dekor bzw. dem Etikett ganz oder teilweise bedeckt ist.

In Ausführungsformen der Erfindung ist die Erfassungseinrichtung zur Erfassung der Ausrichtung eines zu inspizierenden Behälters zur Positionsbestimmung mindestens einer Schweißnaht des Behälters ausgebildet.

Anhand der ermittelten Position des Behältermerkmals und dem Vergleich mit der Sollposition des Behältermerkmals in der definierten Ausrichtung des Behälters ist eine Ausrichtungsabweichung automatisiert bestimmbar.

Das Ausrichtungssystem ist zur Ausrichtung des Behälters in Abhängigkeit der bestimmten Ausrichtungsabweichung ausgebildet.

Dazu weist das Ausrichtungssystem mindestens ein Drehelement auf, mit dem der Behälter aus der ermittelten Ausrichtung in die Sollausrichtung verdrehbar ist.

In Ausführungsformen der Erfindung weist das Ausrichtungssystem zwei mit ihren Auflageflächen gegenüberliegend und etwa parallel zueinander ausgerichtete Förderbänder auf, die mit einem Abstand voneinander angeordnet sind, der wenig kleiner als der Durchmesser des zu inspizierenden Behälters ist. Die Förderbänder sind zur Kontaktierung der zu inspizierenden Außenfläche, in Bezug auf eine Dose der Mantelfläche, derart ausgebildet, dass der zu inspizierenden Behälter durch eine unterschiedliche Geschwindigkeit der beiden Förderbänder drehbar ist.

Der Abstand der Förderbänder entspricht in Ausführungsformen der Erfindung dem Durchmesser der zu inspizierenden Behälter abzüglich etwa 1 bis 5 mm, besonders bevorzugt abzüglich etwa 2mm.

In Ausführungsformen der Erfindung sind die Förderbänder derart gegenläufig ansteuerbar bzw. antreibbar, dass der Behälter zur Korrektur der Ausrichtungsabweichung in die Sollausrichtung drehbar ist.

In vorteilhaften Ausführungsformen der Erfindung sind die Förderbänder gummiert.

Die mindestens eine Bilderfassungseinrichtung zur Erfassung der mindestens einen zu inspizierenden Außenfläche des zu inspizierenden Behälters weist mindestens zwei bildgebende Erfassungseinrichtungen, vorzugweise mindestens zwei Kameras, zur Erfassung der zu inspizierenden Außenfläche des zu inspizierenden Behälters auf.

Für die umlaufende Erfassung der gesamten Mantelfläche einer herkömmlichen zylinderförmigen Dose oder einer herkömmlich geformten Flasche weist die Bilderfassungsvorrichtung vorzugsweise mindestens drei bildgebende Erfassungsvorrichtungen auf, die besonders vorzugsweise in gleichen Winkelanständen, bei drei bildgebenden Erfassungseinrichtungen in einem jeweils um 120° zueinander gedrehten Winkel, angeordnet sind.

Gemäß der Erfindung ist die Bilderfassungseinrichtung in mindestens zwei Stationen aufgeteilt, wobei in jeder Station mindestens zwei bildgebende Erfassungseinrichtungen angeordnet sind.

In bevorzugten Ausführungsformen der Erfindung sind die bildgebenden Erfassungseinrichtungen in den Stationen der Bilderfassungseinrichtung jeweils gegenüberliegend angeordnet.

Zwischen den Stationen der Bilderfassungseinrichtung ist jeweils ein Ausrichtungssystem angeordnet, mit der der zu inspizierende Behälter für die folgende Station der Bilderfassungseinrichtung in die jeweilige Sollausrichtung drehbar ist.

In besonders bevorzugten Ausführungsformen der Erfindung weist die Vorrichtung zur Inspektion mindestens einer Außenfläche von Behältern drei hintereinander angeordnete Stationen der Bilderfassungseinrichtung auf, wobei vor jeder der Stationen der Bilderfassungseinrichtung ein Ausrichtungssystem angeordnet ist.

Die Bilderfassungseinrichtung weist vorzugsweise mindestens eine Beleuchtungseinrichtung, vorzugsweise je bildgebender Erfassungseinrichtung jeweils mindestens eine Beleuchtungseinrichtung, auf.

Besonders vorzugsweise weist die Bilderfassungsvorrichtung je bildgebender Erfassungseinrichtung mindestens zwei Beleuchtungseinrichtungen auf, die jeweils seitlich auf den zu inspizierenden Behälter gerichtet sind, wenn sich dieser im Fokus der jeweiligen bildgebenden Erfassungseinrichtung befindet.

Ganz besonders bevorzugt sind die jeder bildgebenden Erfassungseinrichtung zugeordneten mindestens zwei Beleuchtungseinrichtungen so angeordnet, dass die zu inspizierenden Behälter im Fokus der jeweiligen bildgebenden Erfassungseinrichtung seitenverkehrt synchron beleuchtbar sind.

In vorteilhaften Ausführungsformen der Erfindung sind die bildgebenden Erfassungseinrichtungen in mindestens einer Erfassungskammer angeordnet, durch die der zu inspizierende Behälter hindurch transportierbar ist. Die Verwendung von Erfassungskammern ermöglicht die Verringerung von äußeren Einflüssen auf die erfassten Bilder der zu inspizierenden Behälter und damit eine zuverlässigere Inspektion.

In Ausführungsformen der Erfindung mit mehreren Stationen der Bilderfassungseinrichtung ist vorzugsweise eine Erfassungskammer je Station vorgesehen.

Zur Erzeugung von optimalen Bedingungen für eine optische Inspektion des zu inspizierenden Behälters mithilfe der bildgebenden Erfassungseinrichtungen weist die Bilderfassungsvorrichtung in vorteilhaften Ausführungsformen der Erfindung vorzugsweise jeweils gegenüberliegend zu der mindestens einen bildgebenden Erfassungseinrichtung angeordnet mindestens ein Wandelement zur Ausbildung eines definierten homogenen Hintergrunds auf.

Vorzugsweise ist der Hintergrund farblich und/oder im Hinblick auf seine Helligkeit so gestaltet, dass dieser einen hohen Kontrast zu dem zu inspizierenden Behälter aufweist.

Besonders vorzugsweise ist der Hintergrund matt.

Durch die erfindungsgemäße Verwendung von Wandelementen zur Erzeugung definierter homogener Hintergründe für die optische Inspektion der Behälter werden Hintergrundstörgrößen, die sich negativ auf die für die Inspektion erforderliche Bildverarbeitung und Auswertung auswirken, minimiert.

In vorteilhaften Ausführungsformen der Erfindung weist die Vorrichtung zur Inspektion mindestens einer Außenfläche von Behältern mindestens eine Auswerteeinheit zur automatischen Auswertung der aufgenommenen Bilder und zum automatischen Vergleich der aufgenommenen Bilder mit Referenzbildern auf.

Bei Abweichungen zwischen den aufgenommenen Bildern und den Referenzbildern ist mithilfe der Auswerteeinheit automatisiert ein fehlerhafter Behälter identifizierbar, sodass fehlerhafte Behälter in Ausführungsformen der Erfindung automatisiert aussortierbar sind und/oder eine entsprechende Ausgabe an das Personal generierbar ist.

Die erfindungsgemäße Vorrichtung zur Inspektion mindestens einer Außenfläche von Behältern weist mindestens eine Transportvorrichtung zum Transportieren der zu inspizierenden Behälter zwischen und/oder in der Erfassungseinrichtung zur Erfassung der Ausrichtung eines zu inspizierenden Behälters, dem Ausrichtungssystem zur definierten Ausrichtung eines zu inspizierenden Behälters sowie der Bilderfassungseinrichtung zur Erfassung der mindestens einen zu inspizierenden Außenfläche des zu inspizierenden Behälters auf.

Die Transportvorrichtung ist in Ausführungsformen der Erfindung durch mindestens ein Förderband realisiert.

In Ausführungsformen der Erfindung, in denen die zu inspizierenden Behälter mithilfe einer Transportvorrichtung durch die Bilderfassungseinrichtung hindurch transportiert werden, sind die bildgebenden Erfassungseinrichtungen vorzugsweise so angeordnet und ausgerichtet, dass die Transportvorrichtung außerhalb des Erfassungsbereichs der bildgebenden Erfassungseinrichtungen liegt. Dadurch werden beispielsweise Einflüsse des ggf. durch Abnutzung und/oder Verschmutzung inhomogenen Transportbands auf das zu inspizierende Bild zumindest signifikant reduziert.

Ein erfindungsgemäßes Verfahren zur Inspektion mindestens einer Außenfläche von Behältern umfasst mindestens die folgenden Verfahrensschritte:
- Detektion der Ausrichtung eines zu inspizierenden Behälters in Bezug auf eine Drehachse,
- Automatische Ermittlung der Abweichung der detektierten Ausrichtung von einer vorgegebenen Sollausrichtung des zu inspizierenden Behälters,
- Automatische Ausrichtung des zu inspizierenden Behälters in die Sollausrichtung,
- Inspektion mindestens einer Außenfläche des zu inspizierenden Behälters mithilfe mindestens einer Bilderfassungseinrichtung durch die automatische Aufnahme von Bildern der zu inspizierenden Außenfläche und den automatischen Vergleich der aufgenommenen Bilder mit hinterlegten Referenzbildern.

Gemäß dem erfindungsgemäßen Verfahren wird die zu inspizierende Außenwand der zu inspizierenden Behälter in mindestens zwei Stationen der Bilderfassungseinrichtung hintereinander erfasst, wobei der zu inspizierende Behälter vor jeder Station der Bilderfassungseinrichtung in eine vorgegebene Sollausrichtung verbracht wird.

In besonders bevorzugten Ausführungsformen der Erfindung wird die zu inspizierende Außenwand der zu inspizierenden Behälter in drei Stationen der Bilderfassungseinrichtung hintereinander erfasst, wobei der zu inspizierende Behälter vor jeder Station der Bilderfassungseinrichtung in eine vorgegebene Sollausrichtung verbracht wird. Dabei wird der zu inspizierende Behälter nach der ersten und nach der zweiten Station der Bilderfassungsvorrichtung jeweils um 60° in derselben Richtung weitergedreht.

In den Stationen der Bilderfassungseinrichtung werden vorzugsweise von gegenüberliegend angeordneten bildgebenden Erfassungseinrichtungen, beispielsweise Kameras, zwischen denen der zu inspizierende Behälter mittig hindurchgeführt wird, Bilder der zu inspizierenden Außenfläche aufgenommen. Wird jeweils ein Winkelbereich von 60° als auszuwertender Bildbereich definiert, ergibt sich durch die Aufnahme von Bildern des zu inspizierenden Behälters aus insgesamt sechs Ansichten mit jeweils einem auszuwertenden Winkelbereich von 60° ein vollständiges umlaufendes (360°-)Bild der zu inspizierenden Außenfläche.

In Ausführungsformen des erfindungsgemäßen Verfahrens erfolgt ein direkter Abgleich der Bilder der einzelnen Ansichten des zu inspizierenden Behälters mit Referenzbilder derselben Ansicht. Hierdurch ist kein Zusammensetzen der Einzelansichten zu einer Gesamtansicht mehr erforderlich und eine einfachere und zuverlässigere Bildauswertung für die Behälterinspektion ermöglicht.

In bevorzugten Ausführungsformen des Verfahrens werden die Behälter durchgehend ohne Stopps in Förderrichtung transportiert. Dies ermöglicht eine Integration in Anlagen mit hohen Produktionsgeschwindigkeiten ohne, dass diese durch die Inspektion beeinträchtigt würde.

In einer bevorzugten Ausführungsform eines erfindungsgemäßen Verfahrens wird eine erfindungsgemäße Vorrichtung zur Inspektion der Außenflächen von Behältern verwendet.

In Ausführungsformen der Erfindung sind mithilfe der erfindungsgemäßen Vorrichtung und/oder dem erfindungsgemäßen Verfahren kleine Dekorfehler in einer Größenordnung von etwa 1 mm² sicher und mit geringem Parametrieraufwand detektierbar.

In den nachfolgend erläuterten Figuren ist eine beispielhafte Ausführungsform der Erfindung dargestellt. Es zeigen:
- Figur 1:: Eine Draufsicht auf einen horizontalen Schnitt durch eine erfindungsgemäße Vorrichtung zur Inspektion mindestens einer Außenfläche von Behältern und
- Figur 2:: Eine Seitenansicht der Vorrichtung zur Inspektion der Außenflächen von Behältern gemäß Figur 1.

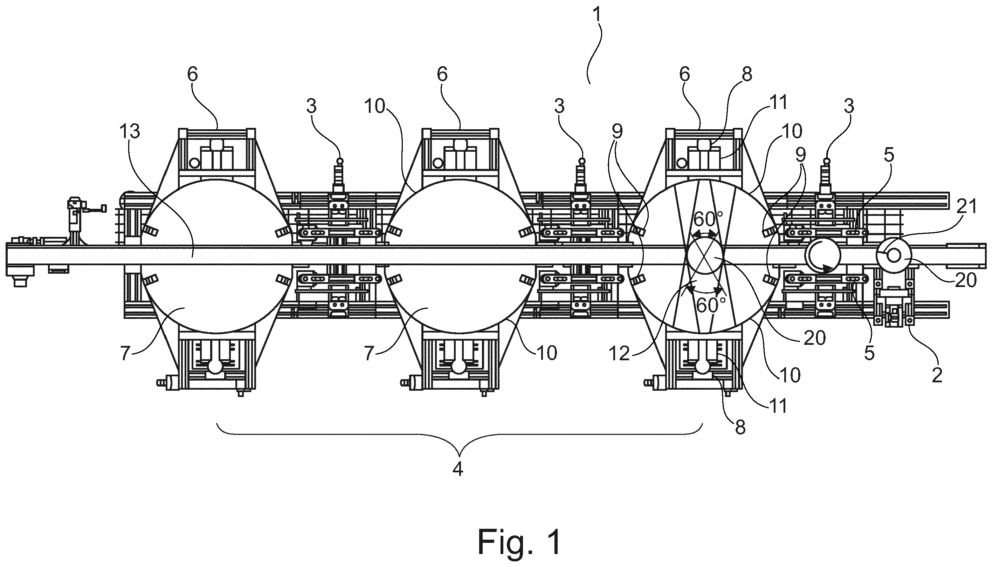

In Figur 1 ist eine Draufsicht auf einen Schnitt durch eine erfindungsgemäße Vorrichtung (1) zur Inspektion mindestens einer Außenfläche von Behältern (20) dargestellt. Die Inspektionsvorrichtung (1) umfasst eine Erfassungseinrichtung (2) zur Erfassung der Ausrichtung eines zu inspizierenden Behälters (20) anhand eines Behältermerkmals (21), ein Ausrichtungssystem (3) und eine Bilderfassungsvorrichtung (4) umfassend drei Stationen (6). Darüber hinaus weist die Vorrichtung (1) eine als ein Förderband ausgebildete Transportvorrichtung (13) auf.

In Förderrichtung vor jeder der Stationen (6) der Bilderfassungsvorrichtung (4) ist ein Ausrichtungssystem (3) angeordnet, um den zu inspizierenden Behälter (20) für die jeweilige Bilderfassung in die vorgegebene Sollausrichtung zu verbringen.

Das Ausrichtungssystem (3) weist jeweils zwei als Förderbänder ausgebildete Drehelemente (5) auf, mit denen ein Behälter (20) um eine vertikale Drehachse drehbar ist, während dieser auf der Transportvorrichtung (13) transportiert wird. Dazu sind die Förderbänder mit einer Förderrichtung parallel zur Transportvorrichtung (13) jedoch vertikal aufgestellt ausgerichtet, sodass die Förderbänder die Seitenwand des stehend transportierten Behälters (20) kontaktieren.

Jede der Stationen (6) der Bilderfassungsvorrichtung (4) weist eine Erfassungskammer (7) auf, die nach außen durch ein Gehäuse begrenzt ist. In jeder Erfassungskammer (7) sind auf gegenüberliegenden Seiten neben dem Transportband als Kameras ausgebildete bildgebende Erfassungseinrichtungen (8) sowie je bildgebender Erfassungseinrichtung (8) jeweils zwei zugeordnete Beleuchtungseinrichtungen (9) angeordnet.

Die bildgebenden Erfassungseinrichtungen (8) sind in der dargestellten Ausführungsform der Erfindung in Wandelemente (10) integriert bzw. hinter diesen angeordnet. Die Wandelemente (10) sind rohrsegmentartig geformt und dienen der Erzeugung eines homogenen Hintergrunds für die Bilderfassung.

Im Bereich der der Transportvorrichtung (13) zugewandten Enden der Wandelemente (10) sind die Beleuchtungseinrichtungen (9) angeordnet und auf den im Fokus der bildgebenden Erfassungseinrichtungen (8) befindlichen zu inspizierenden Behälter (20) ausgerichtet.

Die bildgebenden Erfassungseinrichtungen (8) weisen jeweils einen definierten auswertbaren Winkelbereich (12) von 60° auf.

Im Bereich der bildgebenden Erfassungseinrichtungen (8) ist jeweils ein Strahlteiler (11) angeordnet.

Der Strahlteiler (11) verhindert in diesem Aufbau, dass die bildgebende Erfassungseinrichtung (8), beispielsweise eine Kamera, sich selber "sieht", sondern einen durch den Strahlteiler (11) selbst erzeugten homogenen Hintergrund, der dem restlichen Hintergrund gleich ist.

Die gegenüberliegenden Beleuchtungseinrichtungen (9) erzeugen einen homogenen Hintergrund für die bildgebende Erfassungseinrichtung (8). Der Abstand der Beleuchtungseinrichtungen (9) ergibt sich in vorteilhaften Ausführungsformen der Erfindung aus dem Sichtwinkel der bildgebenden Erfassungseinrichtung (8) und der betrachteten Krümmung des Prüfobjektes. Ziel ist es dabei, dass die Beleuchtungseinrichtungen (9), die bildgebende Erfassungseinrichtung (8) und andere Störgrößen nicht im Spiegelbild des Prüfobjektes erscheinen.

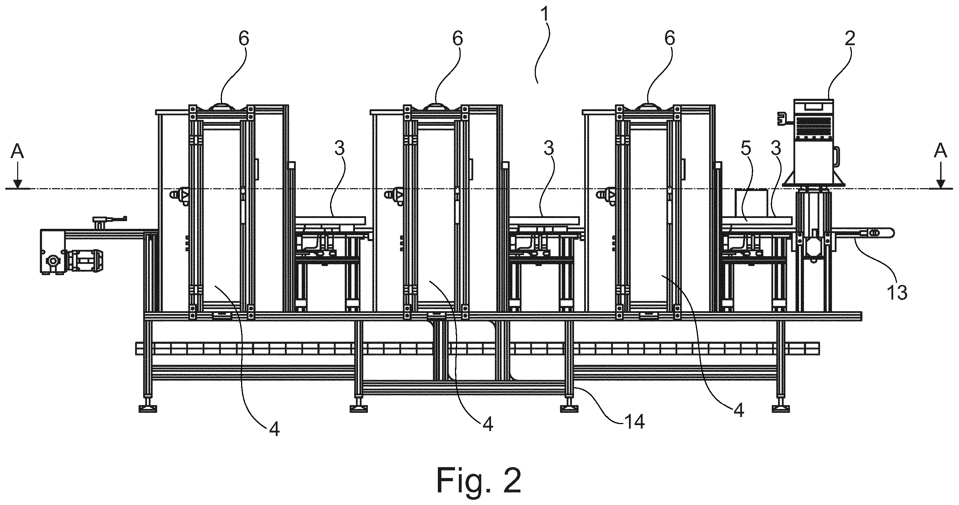

Figur 2 zeigt dieselbe Ausführungsform der erfindungsgemäßen Vorrichtung (1) zur Inspektion von Außenflächen von Behältern in einer Seitenansicht, wobei die Schnittebene AA für die in Figur 1 gezeigte Ansicht eingezeichnet ist.

Die zuvor bereits beschriebenen Elemente der Vorrichtung (1) sind auf einer Rahmenkonstruktion (14) angeordnet.

## Patentansprüche

1. Vorrichtung (1) zur Inspektion mindestens einer Außenfläche von Behältern (20) aufweisend mindestens eine Bilderfassungseinrichtung (4) zur Erfassung der mindestens einen zu inspizierenden Außenfläche des zu inspizierenden Behälters (20) mithilfe von mindestens einer bildgebenden Erfassungseinrichtung (8), wobei die Vorrichtung (1) mindestens eine Erfassungseinrichtung (2) zur Erfassung der Ausrichtung eines zu inspizierenden Behälters (20) anhand der Lagebestimmung mindestens eines Behältermerkmals und mindestens ein Ausrichtungssystem (3) zur definierten Ausrichtung eines zu inspizierenden Behälters (20) in eine Sollausrichtung aufweist und wobei die Erfassungseinrichtung (2) zur Erfassung der Ausrichtung eines zu inspizierenden Behälters (20) mindestens eine Kamera aufweist, die über dem zu inspizierenden Behälter (20) angeordnet und derart ausgerichtet ist, dass der Kamerafokus von oben auf und/oder in den Behälter (20) gerichtet ist, wobei anhand der ermittelten Position des Behältermerkmals und dem Vergleich mit der Sollposition des Behältermerkmals in der Sollausrichtung des Behälters (20) eine Ausrichtungsabweichung bestimmbar ist und wobei das Ausrichtungssystem (3) zur definierten Ausrichtung des zu inspizierenden Behälters (20) in Abhängigkeit der bestimmten Ausrichtungsabweichung ausgebildet ist, wobei das Ausrichtungssystem (3) mindestens ein Drehelement (5) aufweist, mit dem der Behälter (20) aus der ermittelten Ausrichtung in die Sollausrichtung verdrehbar ist, wobei die Vorrichtung (1) mindestens eine Transportvorrichtung (13) zum Transportieren der zu inspizierenden Behälter (20) zwischen und/oder in der Erfassungseinrichtung (2), dem Ausrichtungssystem (3) sowie der Bilderfassungseinrichtung (4) aufweist, **dadurch gekennzeichnet, dass** die Bilderfassungseinrichtung (4) in mindestens zwei Stationen (6) aufgeteilt ist, wobei in jeder Station (6) mindestens zwei bildgebende Erfassungseinrichtungen (8) angeordnet sind, wobei vor der ersten und zwischen den übrigen Stationen (6) der Bilderfassungseinrichtung (4) jeweils ein Ausrichtungssystem (3) angeordnet ist, mit dem der zu inspizierende Behälter (20) für die folgende Station (6) der Bilderfassungseinrichtung (4) in die jeweilige Sollausrichtung drehbar ist.

2. Vorrichtung (1) nach Anspruch 1, **dadurch gekennzeichnet, dass** die Erfassungseinrichtung (2) zur Erfassung der Ausrichtung eines zu inspizierenden Behälters (20) anhand der Lagebestimmung eines im zu inspizierenden Behälter (20) innenliegenden Behältermerkmals ausgebildet ist.

3. Vorrichtung (1) nach einem der Ansprüche 1 und 2, **dadurch gekennzeichnet, dass** die Erfassungseinrichtung (2) zur Erfassung der Ausrichtung eines zu inspizierenden Behälters (20) anhand der Lagebestimmung mindestens einer Schweißnaht als Behältermerkmal ausgebildet ist.

4. Vorrichtung (1) nach einem der Ansprüche 1 bis 3, **dadurch gekennzeichnet, dass** das Ausrichtungssystem (3) zwei mit ihren Auflageflächen gegenüberliegend und etwa parallel zueinander ausgerichtete Förderbänder aufweist, die mit einem Abstand voneinander angeordnet sind, der wenig kleiner als der Durchmesser des zu inspizierenden Behälters (20) ist, wobei die Förderbänder zur Kontaktierung der zu inspizierenden Außenfläche des Behälters (20) derart ausgebildet sind, dass der zu inspizierenden Behälter (20) durch eine unterschiedliche Geschwindigkeit der beiden Förderbänder drehbar ist.

5. Vorrichtung (1) nach einem der Ansprüche 1 bis 4, **dadurch gekennzeichnet, dass** die mindestens eine bildgebende Erfassungseinrichtung (8) in mindestens einer Erfassungskammer (7) angeordnet ist, durch die der zu inspizierende Behälter (20) hindurch transportierbar ist.

6. Vorrichtung (1) nach einem der Ansprüche 1 bis 5, **dadurch gekennzeichnet, dass** jede der Stationen (6) der Bilderfassungsvorrichtung (4) eine Erfassungskammer (7) aufweist, die nach außen durch ein Gehäuse begrenzt ist, wobei in jeder Erfassungskammer (7) auf gegenüberliegenden Seiten neben der Transportvorrichtung (13) als Kameras ausgebildete bildgebende Erfassungseinrichtungen (8) sowie je bildgebender Erfassungseinrichtung (8) jeweils zwei zugeordnete Beleuchtungseinrichtungen (9) angeordnet sind und wobei die bildgebenden Erfassungseinrichtungen (8) in Wandelemente (10) integriert bzw. hinter diesen angeordnet sind und wobei die Wandelemente (10) rohrsegmentartig geformt sind und der Erzeugung eines homogenen Hintergrunds für die Bilderfassung dienen und wobei im Bereich der der Transportvorrichtung (13) zugewandten Enden der Wandelemente (10) die Beleuchtungseinrichtungen (9) angeordnet und auf den im Fokus der bildgebenden Erfassungseinrichtungen (8) befindlichen zu inspizierenden Behälter (20) ausgerichtet sind.

7. Vorrichtung (1) nach einem der Ansprüche 1 bis 6, **dadurch gekennzeichnet, dass** diese mindestens eine Auswerteeinheit zur automatischen Auswertung der aufgenommenen Bilder und zum automatischen Vergleich der aufgenommenen Bilder mit Referenzbildern aufweist.

8. Vorrichtung (1) nach einem der Ansprüche 1 bis 7, **dadurch gekennzeichnet**, die mindestens eine bildgebende Erfassungseinrichtung (8) so angeordnet und ausgerichtet ist, dass die Transportvorrichtung (13) außerhalb des Erfassungsbereichs der bildgebenden Erfassungseinrichtung (8) liegt.

9. Verfahren zur Inspektion mindestens einer Außenfläche von Behältern (20) umfassend zumindest die Schritte:
a. Detektion der Ausrichtung eines zu inspizierenden Behälters (20) in Bezug auf eine Drehachse anhand der Lagebestimmung mindestens eines Behältermerkmals,
b. Automatische Ermittlung der Abweichung der detektierten Ausrichtung von einer vorgegebenen Sollausrichtung des zu inspizierenden Behälters (20) anhand der ermittelten Position des Behältermerkmals und dem Vergleich mit der Sollposition des Behältermerkmals in der Sollausrichtung des Behälters (20),
c. Automatische Ausrichtung des zu inspizierenden Behälters (20) in die Sollausrichtung,
d. Inspektion mindestens einer Außenfläche des zu inspizierenden Behälters (20) mithilfe mindestens einer Bilderfassungseinrichtung (4) durch die automatische Aufnahme von Bildern der zu inspizierenden Außenfläche und den automatischen Vergleich der aufgenommenen Bilder mit hinterlegten Referenzbildern,
**dadurch gekennzeichnet, dass** die zu inspizierende Außenwand der zu inspizierenden Behälter (20) in mindestens zwei Stationen (6) der Bilderfassungseinrichtung (4) mithilfe von jeweils mindestens zwei bildgebenden Erfassungserichtungen (8) hintereinander erfasst wird, wobei der zu inspizierende Behälter (20) vor jeder Station (6) der Bilderfassungseinrichtung (4) in eine vorgegebene Sollausrichtung verbracht wird.

10. Verfahren nach Anspruch 9, **dadurch gekennzeichnet, dass** die zu inspizierende Außenwand der zu inspizierenden Behälter (20) in drei Stationen (6) der Bilderfassungseinrichtung (4) hintereinander erfasst wird, wobei der zu inspizierende Behälter (20) vor jeder Station der Bilderfassungseinrichtung (4) in eine vorgegebene Sollausrichtung verbracht wird und wobei der zu inspizierende Behälter (20) nach der ersten und nach der zweiten Station (6) der Bilderfassungsvorrichtung (4) jeweils um 60° in derselben Richtung weiter gedreht wird.

11. Verfahren nach einem der Ansprüche 9 bis 10, **dadurch gekennzeichnet, dass** eine Vorrichtung (1) zur Inspektion mindestens einer Außenfläche von Behältern (20) gemäß einem der Ansprüche 1 bis 8 verwendet wird.

## Claims

1. Device (1) for inspecting at least one outer surface of containers (20), comprising at least one image capturing device (4) for capturing the at least one outer surface to be inspected of the container (20) to be inspected using at least one imaging acquisition device (8), wherein the device (1) comprises at least one detection device (2) for detecting the orientation of a container (20) to be inspected based on the position determination of at least one container feature, and at least one alignment system (3) for defining the orientation of a container (20) into a target orientation, and wherein the detection device (2) for detecting the orientation of a container (20) to be inspected comprises at least one camera that is positioned above the container (20) to be inspected and is oriented such that the camera's focus is directed from above onto and/or into the container (20), wherein an alignment deviation can be determined based on the detected position of the container feature and a comparison with the target position of the container feature in the target orientation of the container (20), and wherein the alignment system (3) is configured to align the container (20) to be inspected in a defined manner depending on the determined alignment deviation, wherein the alignment system (3) comprises at least one rotating element (5) with which the container (20) can be rotated from the determined orientation into the target orientation, wherein the device (1) comprises at least one transport device (13) for transporting the containers (20) to be inspected between and/or within the detection device (2), the alignment system (3), and the image capturing device (4), **characterized in that** the image capturing device (4) is divided into at least two stations (6), wherein at least two imaging acquisition devices (8) are arranged in each station (6), and wherein an alignment system (3) is arranged before the first station and between the remaining stations (6) of the image capturing device (4), with which the container (20) to be inspected can be rotated into the respective target orientation for the subsequent station (6) of the image capturing device (4).

2. Device (1) according to claim 1, **characterized in that** the detection device (2) is configured to detect the orientation of a container (20) to be inspected based on the position determination of a container feature located inside the container (20) to be inspected.

3. Device (1) according to one of claims 1 and 2, **characterized in that** the detection device (2) is configured to detect the orientation of a container (20) to be inspected based on the position of at least one weld seam as a container feature.

4. Device (1) according to any one of claims 1 to 3, **characterized in that** the alignment system (3) comprises two conveyor belts whose support surfaces face each other and are oriented approximately parallel to one another, and which are spaced apart by a distance that is slightly less than the diameter of the container (20), wherein the conveyor belts are configured to contact the outer surface of the container (20) to be inspected in such a way that the container (20) to be inspected is rotated by a difference in speed between the two conveyor belts.

5. Device (1) according to any one of claims 1 to 4, **characterized in that** the at least one imaging acquisition device (8) is arranged in at least one acquisition chamber (7) through which the container (20) to be inspected can be transported.

6. Device (1) according to any one of claims 1 to 5, **characterized in that** each of the stations (6) of the image capturing device (4) comprises an acquisition chamber (7) bounded on the outside by a housing, wherein in each acquisition chamber (7), on opposite sides adjacent to the transport device (13), imaging acquisition devices configured as cameras (8), as well as two associated illumination devices (9) for each imaging acquisition device (8) are arranged, and wherein the imaging acquisition devices (8) are integrated into or arranged behind wall elements (10), and wherein the wall elements (10) are shaped like tubular segments and serve to create a homogeneous background for image capture, and wherein, in the region of the ends of the wall elements (10) facing the transport device (13), the illumination devices (9) are arranged and aligned with the containers (20) to be inspected, which are located in the focal plane of the imaging acquisition devices (8).

7. Device (1) according to any one of claims 1 to 6, **characterized in that** it comprises at least one evaluation unit for automatically evaluating the captured images and for automatically comparing the captured images with reference images.

8. Device (1) according to any one of claims 1 to 7, **characterized in that** the at least one imaging acquisition device (8) is arranged and aligned such that the transport device (13) lies outside the detection range of the imaging acquisition device (8).

9. Method for inspecting at least one outer surface of containers (20), comprising at least the steps of:
a. detecting the orientation of a container (20) to be inspected relative to an axis of rotation based on the position determination of at least one container feature,
b. automatically determining the deviation of the detected orientation from a predetermined target orientation of the container (20) to be inspected based on the determined position of the container feature and a comparison with the target position of the container feature in the target orientation of the container (20),
c. Automatically aligning the container (20) to be inspected to the target orientation,
d. Inspection of at least one outer surface of the container (20) to be inspected using at least one image capturing device (4) by automatically capturing images of the outer surface to be inspected and automatically comparing the captured images with stored reference images,
**characterized in that** the outer wall of the container (20) to be inspected is imaged sequentially at at least two stations (6) of the image capturing device (4) using at least two imaging acquisition devices (8) at each station, wherein the container (20) to be inspected is positioned in a predetermined target orientation before each station (6) of the image capturing device (4) is positioned in a predetermined target orientation.

10. Method according to claim 9, **characterized in that** the outer wall of the container (20) to be inspected is captured sequentially at three stations (6) of the image capturing device (4), wherein the container (20) to be inspected is positioned in a predetermined target orientation before each station of the image capturing device (4) is positioned in a predetermined target orientation, and wherein the container (20) to be inspected is rotated a further 60° in the same direction after the first and second stations (6) of the image capturing device (4).

11. Method according to any one of claims 9 to 10, **characterized in that** a device (1) for inspecting at least one outer surface of containers (20) according to any one of claims 1 to 8 is used.

## Revendications

1. Dispositif (1) d'inspection d'au moins une surface extérieure de contenants (20), comportant au moins un équipement de détection d'image (4) destiné à détecter l'au moins une surface extérieure à inspecter du contenant (20) à inspecter à l'aide d'au moins un équipement de détection d'imagerie (8), le dispositif (1) comportant au moins un équipement de détection (2) destiné à détecter l'orientation d'un contenant (20) à inspecter à l'aide de la définition de position d'au moins une caractéristique de contenant et au moins un système d'orientation (3) destiné à orienter de manière définie un contenant (20) à inspecter dans une orientation de consigne, et l'équipement de détection (2) destiné à détecter l'orientation d'un contenant (20) à inspecter comportant au moins une caméra, qui est disposée au-dessus du contenant (20) à inspecter et est orientée de telle manière que la mise au point de la caméra est dirigée depuis le haut sur et/ou dans le contenant (20), un écart d'orientation pouvant être défini à l'aide de la position déterminée de la caractéristique de contenant et de la comparaison à la position de consigne de la caractéristique de contenant dans l'orientation de consigne du contenant (20) et le système d'orientation (3) étant formé pour l'orientation définie du contenant (20) à inspecter en fonction de l'écart d'orientation défini, le système d'orientation (3) comportant au moins un élément rotatif (5) au moyen duquel le contenant (20) peut être tourné hors de l'orientation déterminée dans l'orientation de consigne, le dispositif (1) comportant au moins un dispositif de transport (13) destiné à transporter les contenants (20) à inspecter entre et/ou dans l'équipement de détection (2), le système d'orientation (3) et l'équipement de détection d'image (4), **caractérisé en ce que** l'équipement de détection d'image (4) est divisé en au moins deux postes (6), au moins deux équipements de détection d'imagerie (8) étant disposés dans chaque poste (6), respectivement un système d'orientation (3) étant disposé devant le premier poste et entre les postes (6) restants de l'équipement de détection d'image (4), avec lequel le contenant (20) à inspecter peut être tourné dans l'orientation de consigne respective pour le poste (6) suivant de l'équipement de détection d'image (4).

2. Dispositif (1) selon la revendication 1, **caractérisé en ce que** l'équipement de détection (2) est formé pour détecter l'orientation d'un contenant (20) à inspecter à l'aide de la définition de position d'une caractéristique de contenant située à l'intérieur dans le contenant (20) à inspecter.

3. Dispositif (1) selon l'une des revendications 1 et 2, **caractérisé en ce que** l'équipement de détection (2) est formé pour détecter l'orientation d'un contenant (20) à inspecter à l'aide de la définition de position d'au moins un cordon de soudure en tant que caractéristique de contenant.

4. Dispositif (1) selon l'une des revendications 1 à 3, **caractérisé en ce que** le système d'orientation (3) comporte deux bandes transporteuses orientées de manière à se faire face avec leurs surfaces d'appui et approximativement parallèlement l'une par rapport à l'autre, qui sont disposées à une distance l'une de l'autre qui est légèrement inférieure au diamètre du contenant (20) à inspecter, les bandes transporteuses étant formées de manière à venir en contact avec la surface extérieure à inspecter du contenant (20) de telle manière que le contenant (20) à inspecter peut être tourné par une vitesse différente des deux bandes transporteuses.

5. Dispositif (1) selon l'une des revendications 1 à 4, **caractérisé en ce que** l'au moins un équipement de détection d'imagerie (8) est disposé dans au moins une chambre de détection (7) à travers laquelle le contenant (20) à inspecter peut être transporté.

6. Dispositif (1) selon l'une des revendications 1 à 5, **caractérisé en ce que** chacun des postes (6) du dispositif de détection d'image (4) comporte une chambre de détection (7), qui est délimitée vers l'extérieur par un boîtier, des équipements de détection d'imagerie (8) formés comme des caméras et, pour chaque équipement de détection d'imagerie (8), deux équipements d'éclairage (9) associés respectivement étant disposés dans chaque chambre de détection (7) sur des côtés opposés à côté du dispositif de transport (13) et les équipements de détection d'imagerie (8) étant intégrés dans des éléments de paroi (10) ou étant disposés derrière ceux-ci, et les éléments de paroi (10) étant formés à la manière de segment tubulaire et servant à la génération d'un arrière-plan homogène pour la détection d'image et les équipements d'éclairage (9) étant disposés dans la zone des extrémités des éléments de paroi (10) tournées vers le dispositif de transport (13) et étant orientés sur le contenant (20) à inspecter situé dans le champ des équipements de détection d'imagerie (8).

7. Dispositif (1) selon l'une des revendications 1 à 6, **caractérisé en ce qu'**il comporte au moins une unité d'évaluation pour l'évaluation automatique des images enregistrées et pour la comparaison automatique des images enregistrées à des images de référence.

8. Dispositif (1) selon l'une des revendications 1 à 7, **caractérisé en ce que** l'au moins un équipement de détection d'imagerie (8) est disposé et aligné de telle sorte que le dispositif de transport (13) se trouve à l'extérieur de la zone de détection de l'équipement de détection d'imagerie (8).

9. Procédé d'inspection d'au moins une surface extérieure de contenants (20), comprenant au moins les étapes :
a. détection de l'orientation d'un contenant (20) à inspecter par rapport à un axe de rotation à l'aide de la définition de position d'au moins une caractéristique de contenant,
b. détermination automatiquement de l'écart de l'orientation détectée par rapport à une orientation de consigne spécifiée du contenant (20) à inspecter à l'aide de la position déterminée de la caractéristique de contenant et de la comparaison à la position de consigne de la caractéristique de contenant dans l'orientation de consigne du contenant (20),
c. orientation automatique du contenant (20) à inspecter dans l'orientation de consigne,
d. inspection d'au moins une surface extérieure du contenant (20) à inspecter à l'aide d'au moins un équipement de détection d'image (4) en enregistrant automatiquement des images de la surface extérieure à inspecter et en comparant automatiquement les images enregistrées à des images de référence mémorisées,
**caractérisé en ce que** la paroi extérieure à inspecter des contenants (20) à inspecter est détectée successivement dans au moins deux postes (6) de l'équipement de détection d'image (4) à l'aide de respectivement au moins deux équipements de détection d'imagerie (8), le contenant (20) à inspecter étant amené dans une orientation de consigne spécifiée avant chaque poste (6) de l'équipement de détection d'image (4).

10. Procédé selon la revendication 9, **caractérisé en ce que** la paroi extérieure à inspecter des contenants (20) à inspecter est détectée successivement dans trois postes (6) de l'équipement de détection d'image (4), le contenant (20) à inspecter étant amené dans une orientation de consigne spécifiée avant chaque poste de l'équipement de détection d'image (4), et le contenant (20) à inspecter étant tourné respectivement de 60° dans la même direction après le premier et après le deuxième poste (6) du dispositif de détection d'image (4).

11. Procédé selon l'une des revendications 9 à 10, **caractérisé en ce qu'**un dispositif (1) d'inspection d'au moins une surface extérieure de contenant (20) selon l'une des revendications 1 à 8 est utilisé.
